Europäisches Patentamt

European Patent Office

Office européen des brevets

(11) Veröffentlichungsnummer: **0 365 749**

**A2**

## (12) EUROPÄISCHE PATENTANMELDUNG

(21) Anmeldenummer: 89112070.1

(22) Anmeldetag: 01.07.89

(51) Int. Cl.⁵: **D01G 27/00 , B65G 37/00**

(30) Priorität: 25.10.88 DE 3836242

(43) Veröffentlichungstag der Anmeldung:
02.05.90 Patentblatt 90/18

(84) Benannte Vertragsstaaten:
CH DE FR IT LI

(71) Anmelder: Zinser Textilmaschinen GmbH
Hans-Zinser-Strasse Postfach 1480
D-7333 Ebersbach/Fils(DE)

(72) Erfinder: Block, Karl-Heinz, Dipl.-Ing.
Schwarenbergstrasse 145
D-7000 Stuttgart 1(DE)

(74) Vertreter: Wilhelm & Dauster Patentanwälte
European Patent Attorneys
Hospitalstrasse 8
D-7000 Stuttgart 1(DE)

(54) Transporteinrichtung zum Versorgen von mehreren Kämmaschinen mit Wickeln.

(57) Bei einer Transporteinrichtung zum Versorgen von mehreren Kämmmaschinen mit vollen Wickeln wird eine Greifeinrichtung für die Wickel vorgesehen, die an einer Laufkatze angebracht ist, die auf einer Kranbrücke angeordnet ist, die auf einer Kranbahn verfahrbar ist. Die Kranbrücke überfährt mehrere hintereinander angeordnete Kämmaschinen mit mehreren Arbeitsstellen. Die Kranbrücke ist mit einer Einrichtung zum Erkennen von mit Wickeln nachzufüllenden Vorratsaufnahmen an den Kämmaschinen ausgerüstet.

Fig. 1

EP 0 365 749 A2

## Transporteinrichtung zum Versorgen von mehreren Kämmaschinen mit Wickeln

Die Erfindung betrifft eine Transporteinrichtung zum Versorgen von mehreren Kämmaschinen mit von einer oder mehreren Vorbereitungsmaschinen erzeugten Wickeln, mit einer Greifeinrichtung für Wickel, die an einer Laufkatze einer auf einer Kranbahn verfahrbaren Kranbrücke angebracht ist und die zum Aufnehmen eines Wickels zu einer Bereithaltestelle für erzeugte Wickel und von dort zu den hintereinander angeordneten Kämmaschinen verfahrbar ist, die jeweils mehrere in einer quer zur Fahrtrichtung der Kranbrücke verlaufenden Reihe angeordnete Arbeitsstellen mit jeweils einer Arbeitsaufnahme für einen abzuarbeitenden Wickel und eine Vorratsaufnahme für einen vollen Wickel aufweisen.

Bei einer Transporteinrichtung der eingangs genannten Art muß die Greifeinrichtung sowie die zugehörige Laufkatze und Kranbrücke eine Information darüber erhalten, wo ein Bedarf an einem Wickel besteht, d.h. an welcher Vorratsaufnahme einer der Kämmaschinen ein Wickel abzulegen ist und abgelegt werden kann. Es bedeutet einen erheblichen Aufwand, diese Informationen von den einzelnen Kämmaschinen an die Greifeinrichtung zu übermitteln.

Der Erfindung liegt die Aufgabe zugrunde, eine Transporteinrichtung der eingangs genannten Art so auszubilden, daß die Greifeinrichtung und die zugehörigen Einrichtungen in einfacher Weise Informationen über die Stellen erhält, an welchen ein Wickel abgelegt werden soll.

Diese Aufgabe wird dadurch gelöst, daß die Kranbrücke mit Einrichtungen zum Erkennen von mit Wickeln nachzufüllenden Vorratsaufnahmen der Kämmaschinen ausgerüstet ist.

Bei dieser Ausbildung führt die Kranbrücke zusammen mit der Laufkatze und der Greifeinrichtung Überwachungsfahrten durch, bei welchen sie selbst den Bedarf an Wickeln an einer Arbeitsstelle einer Kämmaschine feststellt und entsprechend diesem Bedarf das Ablegen eines neuen Wickels bewirkt. Zwischen den einzelnen Kämmaschinen und der Greifeinrichtung oder der Kranbrükke und der Laufkatze müssen keine Verbindungen bestehen, über die Signale übertragen werden.

Bei einer Ausgestaltung der Erfindung wird vorgesehen, daß die Kranbrücke mit Detektoren ausgerüstet ist, deren Anzahl und Abstand der Anzahl und dem Abstand der Arbeitsstellen einer Kämmaschine entspricht und deren von den Arbeitsaufnahmen und den Vorratsaufnahmen der Arbeitsstellen aller Kämmaschinen von den Detektoren detektierbare Elemente zugeordnet sind, die derart unterhalb den jeweils zugehörigen Arbeitsaufnahmen und den jeweils zugehörigen Vorratsaufnahmen angeordnet sind, daß sie von einem darin abgelegten Wickel abgedeckt sind. An sich könnte es genügen, nur den Vorratsaufnahmen detektierbare Elemente zuzuordnen, die das Fehlen eines Wickels an der Vorratsaufnahme aufzeigen. Da jedoch die Kämmaschinen in der Regel so ausgebildet sind, daß ein Vorratswickel aus Platzgründen nur dann in der Vorratsaufnahme abgelegt werden kann, wenn der in der Arbeitsaufnahme befindliche Wickel um einen vorgegebenen Betrag abgearbeitet ist, vorzugsweise die Hälfte des Wickeldurchmessers, muß für das Ablegen eines Wickels ein kombiniertes Signal erzeugt werden, das den Zustand des in der Arbeitsaufnahme befindlichen Wickels berücksichtigt. In zweckmäßiger Ausgestaltung wird dabei vorgesehen, daß die den Arbeitsaufnahmen zugeordneten detektierbaren Elemente - in vertikaler Ansicht - in Fahrtrichtung der Kranbrücke um einen Betrag gegenüber der Mitte der Arbeitsaufnahme versetzt angeordnet sind, der um ein vorgegebenes Maß größer als der halbe Durchmesser einer Wickelhülse ist. Der Versatz gegenüber der Mitte beträgt bevorzugt ein Viertel des Wickeldurchmessers, so daß das detektierbare Element freigegeben wird, wenn der in der Arbeitsaufnahme befindliche Wickel, der gerade abgearbeitet wird, nur noch die Hälfte seines ursprünglichen Durchmessers aufweist.

In weiterer Ausgestaltung der Erfindung wird vorgesehen, daß die Kranbrücke mit einem das Überfahren einer Kämmaschine feststellenden Detektor ausgerüstet ist. Dadurch wird ein Signal gewonnen, das die betreffende Kämmaschine identifiziert und dort auch das Erkennen einer nachzufüllenden Vorratsaufnahme ermöglicht. In zweckmäßiger Ausgestaltung wird dabei vorgesehen, daß dem das Überfahren einer Kämmaschine feststellenden Detektor an der Kranbahn angebrachte detektierbare Elemente zugeordnet sind.

In weiterer Ausgestaltung der Erfindung wird vorgesehen, daß die Kranbrücke mit zwei Sätzen von Detektoren versehen ist, die gegensinnig von der Kranbrücke abragen und die abhängig von der Fahrtrichtung der Kranbrücke aktivierbar sind. Dadurch kann die Kranbrücke sowohl bei Vorwärtsfahrt als auch bei Rückwärtsfahrt eine Überwachung ausführen.

Weitere Merkmale und Vorteile der Erfindung ergeben sich aus der nachfolgenden Beschreibung der in der Zeichnung dargestellten Ausführungsform.

Fig. 1 zeigt eine Draufsicht auf eine schematisch dargestellte Transporteinrichtung, mit welcher mehrere Kämmaschinen mit an Vorbereitungsmaschinen gefertigten Wickeln versorgt werden,

Fig. 2 eine Darstellung eines vergrößerten Schnittes entlang der Linie II-II der Fig. 1 und

Fig. 3a bis 3c eine schematische Darstellung eines Blockschaltbildes der jeweils über einer der Kämmaschinen befindlichen Kranbrücke.

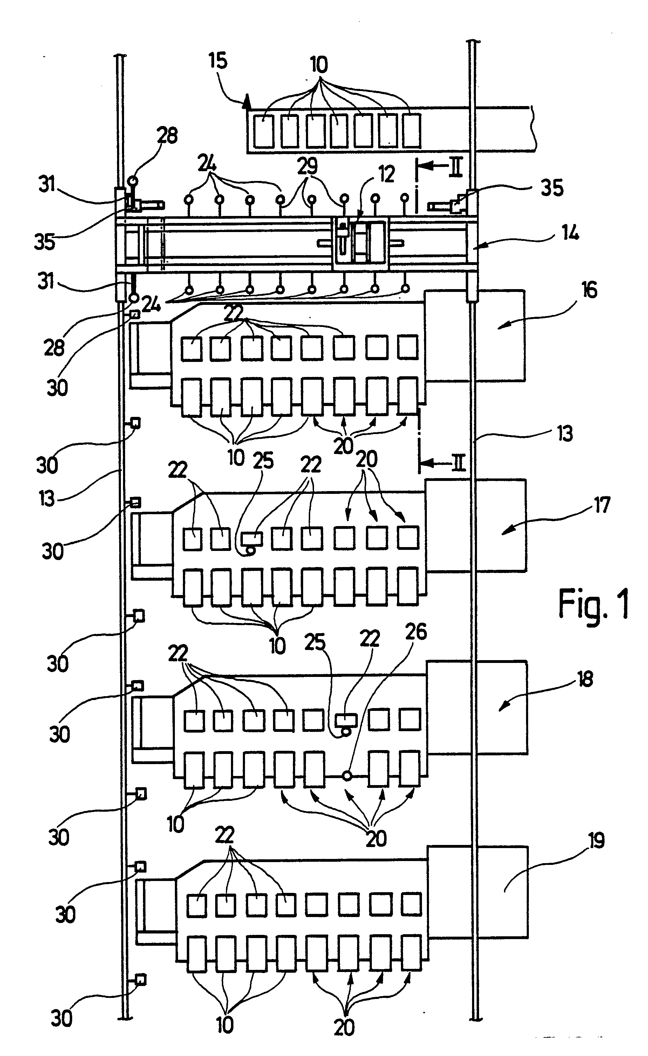

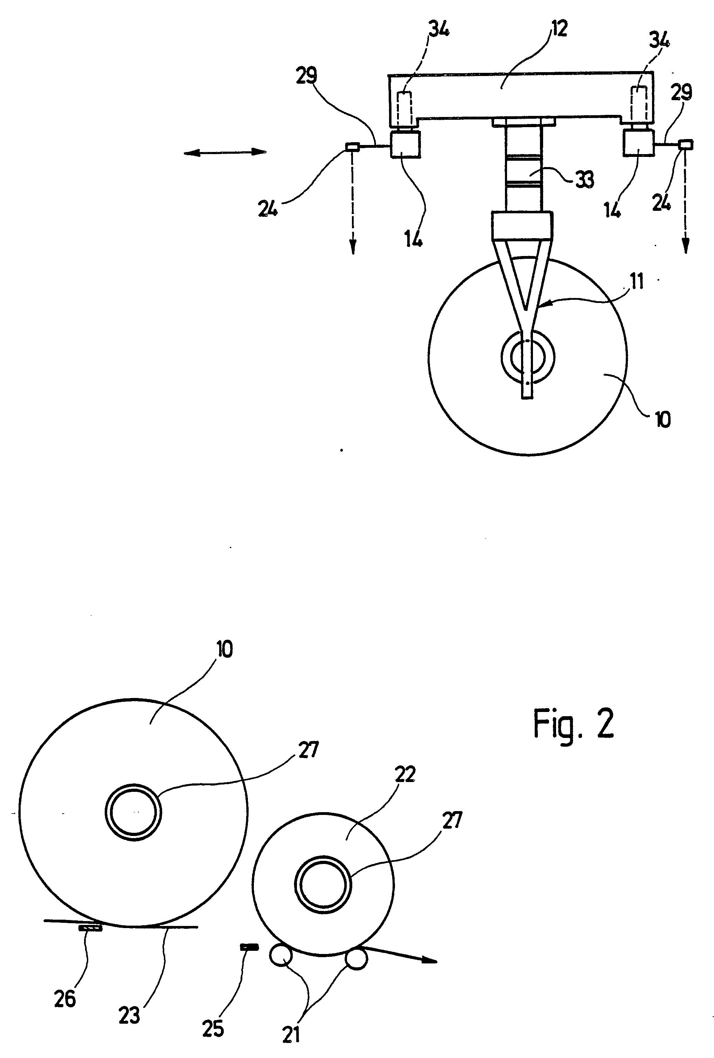

Bei der Darstellung nach Fig. 1 sind vier Kämmaschinen (16, 17, 18, 19) gezeigt, die hintereinander angeordnet sind. Die Kämmmaschinen (16, 17, 18, 19) besitzen jeweils acht Arbeitsstellen (20), an denen Wickel (22) abgearbeitet werden. Die jeweils in einer Reihe angeordneten Arbeitsstellen (20) der Kämmaschinen (16, 17, 18, 19) besitzen jeweils eine Arbeitsaufnahme (21), die von zwei rotierenden Walzen gebildet wird. Auf diesen Arbeitsaufnahmen (21) liegen die Wickel (22) auf, die gerade abgearbeitet werden (Fig. 2). Jeder Arbeitsstelle (20) ist weiter eine Vorratsaufnahme (23) zugeordnet, die aus zwei seitlichen, leicht V-förmigen Blechschalen besteht. In dieser Vorratsaufnahme (23) wird ein voller Wickel (10) auf Vorrat gehalten, der von der Bedienungsperson an die Arbeitsaufnahme (21) übergeben wird, sobald der Wickel (22), der gerade abgearbeitet wird, aufgebraucht oder nahezu aufgebraucht ist.

Der Bereich, der von den Arbeitsstellen (20) der Kämmaschinen (16, 17, 18, 19) eingenommen wird, wird seitlich von einer über den Kämmaschinen (16, 17, 18, 19) angeordneten Kranbahn (13) eingefaßt. Auf dieser Kranbahn (13) verfährt eine Kranbrücke (14), die auf beiden Seiten mit Antriebsmotoren (35) versehen ist. Auf der Kranbrücke (14), die parallel zu den Reihen der Arbeitsstellen (20) verläuft, ist eine verfahrbare Laufkatze (12) angeordnet, die ebenfalls mit einem Antriebsmotor versehen ist.

Wie aus Fig. 2 zu ersehen ist, fährt die Laufkatze (12) mit Laufrädern (34) auf den Trägern der Kranbrücke (14). An der Laufkatze (12) ist eine Greifeinrichtung (11) mittels einer Hubeinrichtung (33) angebracht. Mit der Hubeinrichtung (33) kann die Greifeinrichtung (11) zwischen der in Fig. 2 darge stellten angehobenen Stellung und einer nicht dargestellten abgesenkten Stellung verfahren werden, in welcher volle Wickel (10) auf der Vorratsaufnahme (23) abgelegt werden können.

Die Greifeinrichtung (11), die mit in die Wickelhülsen (27) der Wickel (10) einsteckbaren Zapfen an zwei aufeinander zubewegbaren Greifarmen versehen ist, ist zum Aufnehmen voller Wickel einer Bereithaltestelle (15) zustellbar, an welche Wickel (10) angeliefert werden, die von Vorbereitungsmaschinen vorbereitet und über ein Transportband zugeführt werden. Die Greifeinrichtung (11) nimmt jeweils einen vollen Wickel (10) an der Bereithaltestelle (15) auf und legt ihn an einer Vorratsaufnahme (23) einer der Kämmaschinen (16, 17, 18, 19) ab, an der gerade ein Bedarf besteht. Die Greifeinrichtung (11) bzw. die zu ihr gehörende Kranbrücke (14) ist mit Einrichtungen versehen, die diese einen vollen Wickel (10) benötigende Bereithaltestellung erkennen und entsprechend das Ablegen eines vollen Wickels (10) bewirken. Die Kranbrücke (14) führt hierzu Überwachungsfahrten oberhalb der Kämmaschinen (16, 17, 18, 19) durch.

Die Kranbrücke (14) ist auf Auslegern (29) mit Detektoren (24) versehen, die in den Vertikalebenen liegen, die durch die Arbeitsstellen (20) der hintereinanderliegenden Kämmaschinen (16, 17, 18, 19) verlaufen. Die Kranbrücke (14) ist deshalb mit Detektoren (24) versehen, deren Anzahl und Abstand - in der vertikalen Ansicht gesehen - der Anzahl und dem Abstand der Arbeitsstellen der Kämmaschinen (16, 17, 18, 19) entspricht. Diese Detektoren (24) sind auf Auslegern (29) angeordnet, so daß bei dem Erfassen einer Bedarfssituation, wie das im nachstehenden noch näher geschildert werden wird, die Kranbrücke (14) in der geeigneten Position oberhalb der Vorratsaufnahme (23) der betreffenden Kämmaschine (16, 17, 18, 19) durch Abschalten der Motoren (35) zum Stillstand gebracht werden kann. Um in beiden Fahrtrichtungen, d.h. bei Vorwärtsfahrt und bei Rückwärtsfahrt der Kranbrücke (14), eine Überwachung durchzuführen, sind an der Kranbrücke (14) an gegensinnig abragenden Auslegern auf beiden Seiten gleichartige Detektoren (24) angeordnet. Den Detektoren (24) sind unterhalb der Arbeitsaufnahmen (21) und der Vorratsaufnahmen (23) aller Arbeitsstellen (20) aller Kämmaschinen (16, 17, 18, 19) detektierbare Elemente (25, 26) zugeordnet. Bei einer bevorzugten Ausführungsform werden als Detektoren (24) Lichtsonden vorgesehen, die als Sender und Empfänger eines Lichtstrahls ausgebildet sind. Als detektierbare Elemente (25, 26) dienen dann Reflektoren.

Die Kranbrücke (14) ist mit einem weiteren Detektor (28) versehen, d.h. auf jeder Seite mit einem Detektor (28), die auf abragenden Auslegern (31) angeordnet sind. Diesen Detektoren (28) sind detektierbare Elemente (30) zugeordnet, die an der Kranbahn (13) angebracht sind. Diese detektierbaren Elemente (30) begrenzen jeweils den Bereich, in welchem sich eine Kämmaschine (16, 17, 18, 19) befindet.

Wie aus Fig. 2 zu ersehen ist, sind die detektierbaren Elemente (25, 26) unterhalb der Wickel (10, 22) angeordnet, so daß sie von den Wickeln (10, 22) verdeckt werden und von den Detektoren (24) nicht erkennbar sind, sofern sich Wickel (10 oder 22) in den betreffenden Aufnahmen (21 oder 23) befinden. Das detektierbare Element (25) ist dabei versetzt gegenüber der Mitte der Arbeitsaufnahme (21) angeordnet, und zwar in Fahrtrichtung der Kranbrücke (14) versetzt. Der Versatz beträgt etwa ein Viertel des Durchmessers eines vollen Wickels (10). Das detektierbare Element (25) ist somit für einen Detektor (24) der Kranbrücke (14) erkennbar, sobald der Wickel (22), der gerade abgearbeitet ist, auf etwa seine Hälfte abgearbeitet wurde. Das detektierbare Element (26), das der Vorratsaufnahme (23) zugeordnet ist, ist derart angeordnet, daß es für einen Detektor (24) nur dann sichtbar ist, wenn sich kein Wickel (10) in der Vorratsaufnahme (23) befindet.

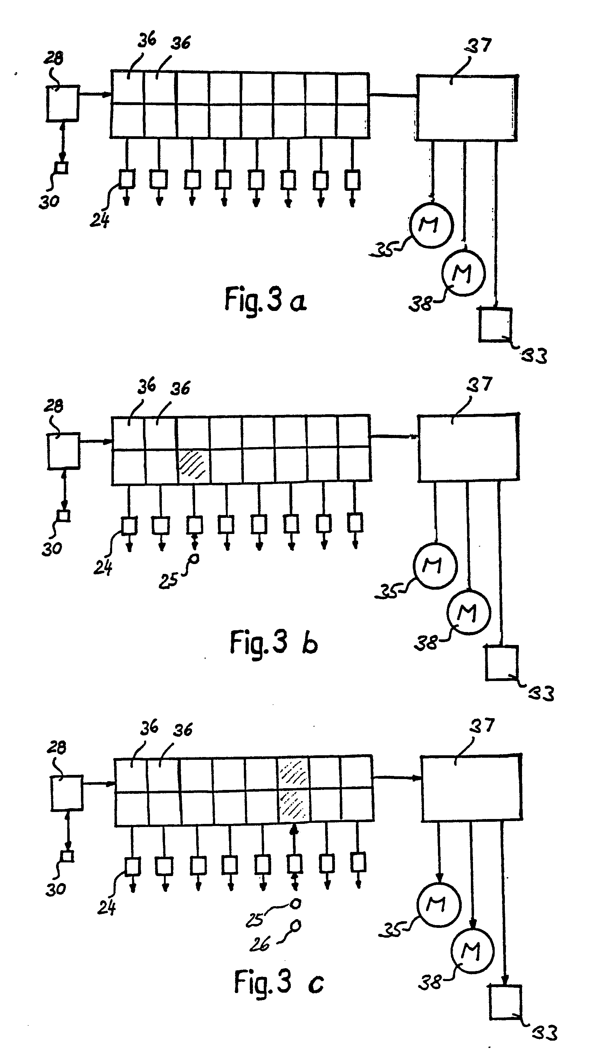

Zu Beginn einer Überwachungsfahrt (s. auch Fig. 3a bis c) übernimmt die Greifeinrichtung (11) einen vollen Wickel (10) an der Bereithaltestellung (15). Die Kranbrücke (14) mit der Greifeinrichtung (11) beginnt dann die Überwachungsfahrt über die Kämmmaschinen (16, 17, 18, 19). Der in Fahrtrichtung vorne liegende Detektor (28) erkennt beim Überfahren des detektierbaren Elementes (30), daß die Kranbrücke (14) in den Bereich einer Kämmmaschine (16) gelangt. Sie startet Zähler (36), an welche die Detektoren (24) Zählimpulse abgeben. Da bei der Kämmaschine (16) sowohl in den Arbeitsaufnahmen (21) Wickel (22) als auch in den Vorratsaufnahmen (23) Wickel (10) liegen, geben die Detektoren (24) kein Signal ab, das gezählt werden könnte. Sobald der Detektor (28) das in Fahrtrichtung zweite detektierbare Element (30) überläuft, wird das dort gewonnene Signal dazu benutzt, die Zähler (36) wieder zu löschen.

Die weiterfahrende Kranbrücke (14) gelangt dann in den Bereich der Kämmaschine (17), so daß das durch den Detektor (28) bei Überlaufen des dieser Kämmaschine (17) zugeordneten detektierbaren Elementes (30) gewonnene Signal die Zähler (36) wieder aktiviert. An einer der Arbeitsstellen ist ein in der Arbeitsaufnahme (21) befindlicher Wickel (22) soweit abgearbeitet, daß für den ihn überlaufenden Detektor (24) das detektierbare Element (25) zu sehen ist. Der Detektor (24) gibt entsprechend einen Zählimpuls an seinen Zähler (36). Die weiterlaufende Kranbrücke (14) gelangt mit dem Detektor (28) in den Bereich des detektierbaren Elementes (30), das das Ende der Kämmaschine (17) anzeigt. Der Zähler (36) wird wieder gelöscht, so daß die Kranbrücke (14) weiterfährt und in den Bereich der Kämmaschine (18) gelangt. In diesem Bereich werden die Zähler (36) wieder durch den über das detektierbare Element (30) dieser Kämmmaschine (18) laufenden Detektor (28) aktiviert. Bei dieser Kämmaschine (18) ist an einer Arbeitsstelle der in der Arbeitsaufnahme (21) befindliche Wickel (22) soweit abgearbeitet, daß das detektierbare Element (25) sichtbar ist. An der gleichen Arbeitsstelle (20) befindet sich außerdem kein Wickel (10) in der Vorratsaufnahme (23), so daß auch dieses detektierbare Element (26) sichtbar ist. Der Detektor (24), der über diese Arbeitsstelle läuft, gibt somit zwei Zählimpulse an seinen Zähler (36), wodurch die Steuerung (37) erkennt, daß an dieser Kämmaschine (18) an einer bestimmten, durch den betreffenden Detektor (24) ermittelten Arbeitsstelle (20) ein neuer Wickel (10) nachzulegen ist. Die Antriebsmotoren (35) der Kranbrücke (14) werden stillgesetzt. Die Laufkatze (12) mit der Greifeinrichtung (11) wird von ihrem Antriebsmotor (38) über der betreffenden Arbeitsstelle (20) positioniert, wonach die Greifeinrichtung (11) durch Betätigen der Hubeinrichtung abgesenkt und geöffnet wird, so daß der Wickel (10) abgelegt wird. Die Greifeinrichtung (11) wird wieder angehoben, wonach die Kranbrücke (14) zurück zu der Bereithaltestelle (15) fährt und einen neuen Wickel (10) aufnimmt. Danach wiederholt sie die Überwachungsfahrt.

## Ansprüche

1. Transporteinrichtung zum Versorgen von mehreren Kämmaschinen mit von einer oder mehreren Vorbereitungsmaschinen erzeugten Wickeln, mit einer Greifeinrichtung für Wickel, die an einer Laufkatze einer auf einer Kranbahn verfahrbaren Kranbrücke angebracht ist und die zum Aufnehmen eines Wickels zu einer Bereithaltestelle für erzeugte Wickel und von dort zu den hintereinander angeordneten Kämmaschinen verfahrbar ist, die jeweils mehrere in einer quer zur Fahrtrichtung der Kranbrücke verlaufenden Reihe angeordnete Arbeitsstellen mit jeweils einer Arbeitsaufnahme für einen abzuarbeitenden Wickel und eine Vorratsaufnahme für einen vollen Wickel aufweisen, dadurch gekennzeichnet, daß die Kranbrücke mit Einrichtungen (24, 25, 26, 28, 30) zum Erkennen von mit Wickeln (10) nachzufüllenden Vorratsaufnahmen (23) der Kämmaschinen (16, 17, 18, 19) ausgerüstet ist.

2. Transporteinrichtung nach Anspruch 1, dadurch gekennzeichnet, daß die Kranbrücke (14) mit Detektoren (24) ausgerüstet ist, deren Anzahl und Abstand der Anzahl und dem Abstand der Arbeitsstellen (20) einer Kämmaschine (16, 17, 18, 19) entspricht.

3. Transporteinrichtung nach Anspruch 2, dadurch gekennzeichnet, daß an den Arbeitsaufnahmen (21) und den Vorratsaufnahmen (23) der Arbeitsstellen (20) aller Kämmaschinen (16, 17, 18, 19) von den Detektoren (20) detektierbare Elemente (25, 26) zugeordnet sind, die derart unter den jeweils zugehörigen Arbeitsaufnahmen (21) und den jeweils zugehörigen Vorratsaufnahmen (23) angeordnet sind, daß sie von einem darin abgelegten Wickel (10, 22) abgedeckt sind.

4. Transporteinrichtung nach Anspruch 2 oder 3, dadurch gekennzeichnet, daß die den Arbeitsaufnahmen (21) zugeordneten detektierbare Elemente (25) - in vertikaler Ansicht - in Fahrtrichtung der Kranbrücke (14) um einen Betrag gegenüber der Mitte der Arbeitsaufnahmen (21) versetzt angeordnet sind, der um ein vorgegebenes Maß größer als der halbe Durchmesser einer Wickelhülse (27) ist.

5. Transporteinrichtung nach einem der Ansprüche 1 bis 4, dadurch gekennzeichnet, daß die Kranbrücke (14) mit einem das Überfahren einer Kämmaschine (16, 17, 18, 19) feststellenden Detektor (28) ausgerüstet ist.

6. Transporteinrichtung nach Anspruch 5, dadurch gekennzeichnet, daß dem das Überfahren einer Kämmaschine (16, 17, 18, 19) feststellenden Detektor (28) an der Kranbahn angebrachte, detektierbare Elemente (30) zugeordnet sind.

7. Transporteinrichtung nach einem der Ansprüche 1 bis 6, dadurch gekennzeichnet, daß die Detektoren (24) auf Auslegern (29) angeordnet sind, die in Fahrtrichtung von der Kranbrücke (14) abragen.

8. Transporteinrichtung nach einem der Ansprüche 1 bis 7, dadurch gekennzeichnet, daß die Kranbrücke (14) mit zwei Sätzen von Detektoren (24, 28) versehen ist, die gegensinnig von der Kranbrücke (14) abragen und die abhängig von der Fahrtrichtung der Kranbrücke (14) aktivierbar sind.

9. Transporteinrichtung nach einem der Ansprüche 1 bis 8, dadurch gekennzeichnet, daß als Detektoren (24, 28) Lichtsonden vorgesehen sind, denen als detektierbare Elemente (25, 26, 30) Reflektoren zugeordnet sind.

Fig. 1

Fig. 2

Fig. 3 a

Fig. 3 b

Fig. 3 c